# FASCICULE DE BREVET EUROPEEN

(11) **EP 2 462 195 B1**
(45) Date de publication et mention de la délivrance du brevet: **02.10.2013**
(21) Numéro de dépôt: 10765469.1
(22) Date de dépôt: 05.08.2010
(51) Int. Cl.: C08L 77/06, C08L 77/02, C08L 77/00, C08L 23/08, C08L 33/06

(54) **COMPOSITION COMPRENANT UN COPOLYAMIDE ET UNE POLYOLEFINE RETICULEE**
ZUSAMMENSETZUNG ENTHALTEND EIN COPOLYAMID UND EIN VERNETZTES POLYOLEFIN
COMPOSITION COMPRISING A COPOLYAMIDE AND A CROSSLINKED POLYOLEFIN

(30) Priorité: 06.08.2009 WO PCT/FR2009/051565
(43) Date de publication de la demande: 13.06.2012
(73) Titulaire: Arkema France, 92700 Colombes (FR)
(72) Inventeur: BLONDEL, Philippe, F-27300 Bernay (FR); BRIFFAUD, Thierry, F-27300 Caorches Saint Nicolas (FR); FERREIRO, Vincent, F-63430 Pont du Chateau (FR)
(74) Mandataire: Delprat, Corinne
(86) Numéro de dépôt international: PCT/FR2010/051659
(87) Numéro de publication internationale: WO 2011/015790

(56) Documents cités:
- EP-A2- 0 212 510
- EP-A2- 1 505 099
- WO-A1-2010/015785
- US-A- 5 003 009
- US-A- 5 292 808
- US-A- 5 440 006

## Description

La présente invention a pour objet une composition comprenant au moins un copolyamide semi-aromatique et au moins une polyoléfine réticulée, son procédé de préparation, ainsi que ses utilisations, notamment dans la fabrication d'objets divers, comme des biens de consommation courante tels que des équipements électriques, électroniques ou automobiles, du matériel chirurgical, de l'emballage ou encore des articles de sport.

### [L'art antérieur et le problème technique]

Dans l'industrie automobile par exemple, les polyamides 12 et 11 sont très utilisés en raison de leurs remarquables propriétés mécaniques, leur facilité d'emploi et leur résistance au vieillissement. Cependant, au-delà de 160°C de température de service, leur résistance thermomécanique n'est pas suffisante.

Les copolyamides de formule 11/10.T, qui résultent de la polycondensation de l'acide amino-11-undécanoïque, de la 1,10-décanediamine et de l'acide téréphtalique, permettent de remplacer les polyamides 12 et 11, tout en conduisant à une tenue thermomécanique améliorée, et tout en conservant leur facilité de transformation et leur souplesse.

Le document FR 2 782 725 décrit une composition thermoplastique comprenant une phase réticulée et une phase polyamide préférentiellement aliphatique, conduisant à un matériau facilement granulable, et dont la plage de fonctionnement de l'extrudeuse est large.

Le document US 2008/0038499 décrit également une composition comprenant un copolyamide semi-aromatique particulier et une polyoléfine pour la fabrication de tubes d'eau destinés aux automobiles.

Or, ces compositions restent encore à améliorer, en particulier en terme de facilité de mise en oeuvre, notamment lors de l'étape de préparation (classiquement par compoundage) pour l'obtention de la composition elle-même ainsi que lors de l'étape de transformation de la composition en un matériau.

Le document EP 1 505 099 décrit des compositions comprenant de 60 à 99,5% en poids d'un copolyamide semi-aromatique et de 0,5 à 40% en poids de polyoléfines réticulées. Si les compositions décrites peuvent être préparées de manière satisfaisante lors d'une étape de compoundage, il n'en demeure pas moins que l'étape de transformation de ces compositions en un matériau présentant de bonnes propriétés thermomécaniques n'est pas complètement satisfaisante, notamment lorsque cette étape de transformation est réalisée par extrusion, par co-extrusion ou par extrusion-soufflage.

Ainsi, il existe un réel besoin de trouver de nouvelles compositions présentant des propriétés améliorées en terme de facilité de préparation (compoundage) et de transformation, notamment par extrusion, co-extrusion ou extrusion-soufflage, tout en conservant les avantages décrits ci-dessus pour les matériaux obtenus à partir de ces compositions, notamment en terme de tenue à haute température.

### [Brève description de /'invention]

De façon surprenante, la demanderesse a trouvé que ce besoin est atteint avec une composition comprenant :
- de 45% à 95% en poids, par rapport au poids total de la composition, d'un copolyamide comprenant au moins deux motifs distincts répondant à la formulation générale suivante :

   A/X.T,

   dans laquelle
   A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atomes de carbone du diacide, a et b étant chacun compris entre 4 et 36 ;
   X.T désigne un motif obtenu à partir de la polycondensation d'une diamine en Cx et de l'acide téréphtalique, avec x représentant le nombre d'atomes de carbone de la diamine en Cx, x étant compris entre 4 et 36,
   ledit copolyamide présentant un indice de polymolécularité, noté Ip, inférieur ou égal à 3,5, mesuré par chromatographie de perméation de gel (en langue anglaise : Gel Permeation Chromatography),
   ledit copolyamide présentant une teneur en fins de chaîne amine comprise entre 0,020 meq/g et 0,058 meq/g ; et
- de 5% à 55% en poids, par rapport au poids total de la composition, d'au moins une polyoléfine réticulée se présentant comme une phase dispersée dans la matrice formée par le copolyamide A/X.T, ladite phase dispersée provenant de la réaction:
   - d'un produit (A) comprenant un époxyde insaturé,
   - d'un produit (B) comprenant un anhydride d'acide carboxylique insaturé ou un acide polycarboxylique, et éventuellement
   - d'un produit (C) comprenant un acide carboxylique insaturé ou un acide alpha-oméga-aminocarboxylique.

L'invention porte également sur un procédé de préparation de la composition, ainsi que sur ses utilisations.

### [Description détaillée de l'invention]

D'autres caractéristiques, aspects, objets et avantages de la présente invention apparaîtront encore plus clairement à la lecture de la description et des exemples qui suivent.

II est précisé que l'expression "compris entre" utilisée dans les paragraphes précédents, mais également dans la suite de la présente description, doit s'entendre comme incluant chacune des bornes mentionnées.

### L'indice de polymolécularité

L'indice de polymolécularité donne une première idée de la distribution des masses molaires des différentes macromolécules au sein du polymère. Pour un polymère parfait, dans lequel toutes les macromolécules seraient linéaires, auraient une même longueur, et par conséquent une même masse molaire, l'indice de polymolécularité Ip serait égal à 1. Pour un polyamide obtenu par polycondensation à partir, entre autres monomères, de diamines et de diacides carboxyliques, l'indice de polymolécularité attendu est de 2,0.

Un indice de polymolécularité supérieur à 2 peut être dû à la présence de ramifications sur la chaîne principale du polymère. Dans le cas des copolyamides, elles peuvent apparaître sur l'atome d'azote de la fonction amide. Ainsi, elles peuvent être quantifiées par RMN (Résonance Magnétique Nucléaire) en comparant le taux d'amide aromatique tertiaire (ramifié) au taux d'amide aromatique secondaire (linéaire).

Ainsi, la demanderesse a trouvé qu'en sélectionnant le copolyamide en fonction de son indice de polymolécularité et notamment en le choisissant inférieur ou égal à 3,5, le copolyamide présentait des propriétés améliorées au sein de la composition.

Cet indice est mesuré de manière classique et connue de l'homme du métier, par chromatographie d'exclusion stérique ou de perméation de gel (en langue anglaise : Gel Permeation Chromatography) comme indiqué ci-dessus. De préférence, l'indice de polymolécularité des copolyamides selon l'invention est mesuré par chromatographie de perméation de gel. Plus particulièrement, il est mesuré dans un solvant approprié pour le copolyamide, tel qu'un solvant fluoré comme par exemple l'hexafluoroisopropanol, à une température comprise entre 20°C et 50°C, de préférence à 40°C.

Le contrôle de l'indice de polymolécularité peut se faire lors de la synthèse du polymère en utilisant de l'acide hypophosphoreux.

De préférence, le copolyamide utilisé dans la composition selon l'invention présente un indice de polymolécularité compris entre 2 et 3,5.

### La terminaison des chaînes amine

De façon surprenante, la demanderesse a également trouvé qu'il fallait non seulement contrôler l'indice de polymolécularité du copolyamide, mais qu'il était également nécessaire de contrôler précisément la quantité de certaines fonctions réactives et, éventuellement, la quantité de fonctions non réactives présentes dans ce copolyamide.

La teneur en fin de chaîne des fonctions amine est mesurée de manière classique et connue de l'homme du métier, par RMN (Résonance Magnétique Nucléaire)

La terminaison des chaînes amine peut se faire au cours de la synthèse dudit copolyamide en mettant en oeuvre des agents de terminaison de chaînes, réagissant avec les fonctions terminales amine des copolyamides, stoppant ainsi la réactivité de l'extrémité de la macromolécule, et notamment la polycondensation.

La réaction de terminaison peut être illustrée de la façon suivante :

Polyamide-NH₂ + R-CO₂H → Polyamide-NH-CO-R + H₂O

Polyamide-NH₂ + HCl → Polyamide-NH₃⁺Cl⁻

Ainsi, les agents de terminaison de chaînes appropriés pour réagir avec la fonction terminale amine peuvent être des acides monocarboxyliques, des anhydrides, des acides monohalogénés, des monoesters, les monoisocyanates ou bien des acides minéraux comme HCl, HNO₃ et H₂SO₄.

Ainsi, pour atteindre l'objectif visant à obtenir une composition permettant d'atteindre simultanément les excellentes propriétés thermomécaniques et les propriétés de préparation et de transformation améliorées par rapport aux compositions de l'art antérieur, la demanderesse a observé qu'en plus de la valeur d'indice de polymolécularité requise et mentionnée ci-dessus, la teneur en fins de chaîne amine devait être comprise entre 0,020 et 0,058 meq/g et, de préférence, entre 0,030 et 0,050 meq/g.

En particulier, grâce à ces valeurs particulières d'indice de polymolécularité et de teneur en fins de chaîne amine requises pour le copolyamide entrant dans la composition selon l'invention, on obtient une composition parfaitement compatible avec les procédés conventionnels de transformation des compositions thermoplastiques que sont, entre autres, l'extrusion, l'injection et la multi-injection. La composition selon l'invention est en particulier parfaitement compatible avec une transformation par extrusion, par co-extrusion ou par extrusion-souflage.

### Les autres terminaisons

Dans une version particulière, le copolyamide de la composition selon l'invention peut présenter :
- une teneur en fins de chaîne acide inférieure ou égale à 0,100 meq/g, avantageusement comprise entre 0,002 et 0,080 meq/g et, de préférence, comprise entre 0,015 et 0,050 meq/g , et/ou
- une teneur en fins de chaîne non réactive supérieure ou égale à 0,020 meq/g, avantageusement supérieure ou égale à 0,030 meq/g et, de préférence, comprise entre 0,035 et 0,200 meq/g.

Comme précédemment, la teneur en fin de chaîne des fonctions acide et non réactive est mesurée de manière classique et connue de l'homme du métier, par RMN (Résonance Magnétique Nucléaire).

Un copolyamide présentant simultanément de telles teneurs en fin de chaine amine, acide et non réactive est décrit dans le document WO 2010/015785.

### La structure chimique du copolyamide

Selon un premier aspect de l'invention, la composition selon l'invention comporte au moins un copolyamide comprenant au moins deux motifs distincts de formule suivante :

A/X.T,

dans laquelle
- A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atomes de carbone du diacide, a et b étant chacun compris entre 4 et 36 ;
- X.T désigne un motif obtenu à partir de la polycondensation d'une diamine en Cx et de l'acide téréphtalique, avec x représentant le nombre d'atomes de carbone de la diamine en Cx, x étant compris entre 4 et 36, avantageusement entre 9 et 18 et préférentiellement entre 10 et 18.

Concernant plus précisément la signification du motif A lorsque A représente un aminoacide, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque.

A la place d'un aminoacide, on pourrait également envisager un mélange de deux, trois,... ou plusieurs aminoacides. Toutefois, les copolyamides formés comprendraient alors trois, quatre,... ou plus, motifs, respectivement.

Lorsque A représente un lactame, il peut être choisi parmi la pyrrolidinone, la 2-pipéridinone, l'énantholactame, le caprylolactame, le pelargolactame, le décanolactame, l'undécanolactame et le lauryllactame (A=12).

De préférence, A désigne un motif obtenu à partir d'un monomère choisi parmi l'acide 10-aminoundécanoïque (noté 11), l'acide 11-aminoundécanoique (noté 11), l'acide amino-12-dodécanoïque (noté 12) et le lauryllactame (noté 12).

Lorsque le motif A est un motif répondant à la formule (diamine en Ca).(diacide en Cb), le motif (diamine en Ca) est choisi parmi les diamines aliphatiques, linéaires ou ramifiées, les diamines cycloaliphatiques et les diamines alkylaromatiques.

Lorsque la diamine est aliphatique et linéaire, de formule H₂N-(CH₂)ₐ-NH₂, le monomère (diamine en Ca) est de préférence choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque le monomère (diamine en Ca) est cycloaliphatique, il est choisi parmi la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-méthane (PACM) et l'isopropylidènedi(cyclohexylamine) (PACP). Il peut également comporter les squelettes carbonés suivants : norbornyl méthane, cyclohexylméthane, dicyclohexylpropane, di(méthylcyclohexyl), di(méthylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est, quant à lui, choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléique et l'acide oléique), comme décrit notamment dans le document EP 0 471 566.

Lorsque le diacide est cycloaliphatique, il peut comporter les squelettes carbonés suivants : norbornyl méthane, cyclohexane, cyclohexylméthane, dicyclohexylméthane, dicyclohexylpropane, di(méthylcyclohexyl), di(méthylcyclohexyl)propane.

Lorsque le diacide est aromatique, il est choisi parmi l'acide téréphtalique (noté T), isophtalique (noté I) et les diacides naphtaléniques.

De préférence, le motif A désigne des motifs aliphatiques, que ces motifs proviennent d'un aminoacide, d'un lactame ou du produit de réaction d'une diamine en Ca et d'un diacide en Cb.

Plus particulièrement, le motif A désigne les motifs suivants 11, 12, 6, 6.10, 6.12, 6.14, 6.18, 10.10, 10.12, 10.14, 10.18 et 12.12.

Le motif X désigne quant-à-lui un motif obtenu à partir d'une diamine comportant un nombre d'atomes de carbone, noté x, compris entre 4 et 36, avantageusement entre 9 et 18 et préférentiellement entre 10 et 18. Ce motif (diamine en Cx) est choisi parmi les diamines aliphatiques, linéaires ou ramifiées.

Lorsque la diamine est aliphatique et linéaire, la diamine est de formule H₂N-(CH₂)ₓ-NH₂ et est choisie parmi la butanediamine (x=4), la pentanediamine (x=5), la hexanediamine (x=6), l'heptanediamine (x=7), l'octanediamine (x=8), la nonanediamine (x=9), la décanediamine (x=10), l'undécanediamine (x=11), la dodécanediamine (x=12), la tridécanediamine (x=13), la tétradécanediamine (x=14), l'hexadécanediamine (x=16), l'octadécanediamine (x=18), l'octadécènediamine (x=18), l'eicosanediamine (x=20), la docosanediamine (x=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Cx) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine et la 2-methyl-1,8-octanediamine.

De préférence, le motif X désigne une diamine linéaire aliphatique comportant de 9 à 18 atomes de carbone. Plus préférentiellement, il désigne un motif obtenu à partir la 1,10-décanediamine (x=10).

Parmi les combinaisons envisageables, les copolyamides suivants présentent un intérêt particulièrement marqué : il s'agit des copolyamides répondant à l'une des formules choisies parmi 11/6.T, 12/6.T, 11/9.T, 12/9.T, 6.10/9.T, 6.12/9.T, 10.10/9.T, 10.12/9.T, 12.12/9.T, 11/10.T, 12/10.T, 6.10/10.T, 6.12/10.T, 10.10/10.T, 10.12/10.T, 12.12/10.T.

De préférence, les copolyamides sont les suivants 11/10.T, 12/10.T, 6.10/10.T, 6.12/10.T, 10.10/10.T, 10.12/10.T, 12.12/10.T.

De préférence, les proportions molaires en diamine notée X et en acide téréphtalique noté T sont préférentiellement stoechiométriques.

De préférence, le rapport molaire de motif(s) A sur le(s) motif(s) X.T est compris entre 0,05 et 2, et de préférence entre 0,1 et 1.

Selon un deuxième aspect de l'invention, le copolyamide ne comporte que deux motifs distincts, le motif A et le motif X.T.

Selon un troisième aspect de l'invention, le copolyamide comprend en outre au moins trois motifs distincts et répond à la formule suivante :

A/X.T/Z,

dans laquelle
- les motifs A et X.T ont la même signification que celle définie ci-dessus, et
- Z est choisi parmi un motif obtenu à partir d'un aminoacide, un motif obtenu à partir d'un lactame et un motif répondant à la formule (diamine en Cd).(diacide en Ce), avec d représentant le nombre d'atomes de carbone de la diamine et e représentant le nombre d'atomes de carbone du diacide, d et e étant chacun compris entre 4 et 36.

Lorsque Z représente un motif obtenu à partir d'un aminoacide, il peut être choisi parmi l'acide 9-aminononanoïque (Z=9), l'acide 10-aminodécanoïque (Z=10), l'acide 10-aminoundécanoïque (noté 11), l'acide 12-aminododécanoïque (Z=12) et l'acide 11-aminoundécanoïque (Z=11) ainsi que ses dérivés, notamment l'acide N-heptyl-11-aminoundécanoïque.

A la place d'un aminoacide, on pourrait également envisager un mélange de deux, trois,... ou plusieurs aminoacides. Dans cette éventualité, les copolyamides formés comprendraient alors quatre, cinq,... ou plus, motifs, respectivement.

Lorsque Z représente un motif obtenu à partir d'un lactame, il peut être choisi parmi la pyrrolidinone, la 2-pipéridinone, le caprolactame (Z=6), l'énantholactame, le caprylolactame, le pelargolactame, le décanolactame, l'undécanolactame et le lauryllactame (Z=12).

A la place d'un lactame, on pourrait également envisager un mélange de deux, trois,... ou plusieurs lactames ou un mélange d'un ou plusieurs aminoacides et d'un ou plusieurs lactames. Dans cette éventualité, les copolyamides formés comprendraient alors quatre, cinq,... ou plus, motifs, respectivement.

Parmi les combinaisons envisageables, les copolyamides suivants présentent un intérêt particulièrement marqué : il s'agit des copolyamides répondant à l'une des formules choisies parmi 11/9.T/12, 11/9.T/6, 12/9.T/6, 11/10.T/12, 11/10.T/6 et 12/10.T/6, et plus particulièrement 11/10.T/12, 11/10.T/6 et 12/10.T/6.

On exclut bien évidemment le cas particulier où le motif Z, lorsqu'il est un motif obtenu à partir un lactame ou un aminoacide est strictement identique au motif A. En effet, dans cette hypothèse particulière, on est en présence du copolyamide déjà envisagé selon le deuxième aspect de l'invention.

Le motif Z peut également répondre à la formule (diamine en Cd).(diacide en Ce), ces motifs ayant la même signification que les motifs (diamine en Ca).(diacide en Cb) décrits ci-dessus dans la définition du motif A.

Parmi toutes les combinaisons possibles pour les copolyamides A/10.T/Z, dans lesquelles Z est un motif (diamine en Cd).(diacide en Ce), on retiendra en particulier les copolyamides répondant à l'une des formules choisies parmi 11/9.T/9.1, 11/9.T/9.6, 12/9.T/9.I, 12/9.T/9.6, 11/10.T/10.I, 11/10.T/10.6, 11/10.T/6.T, 12/10.T/10.I, 12/10.T/10.6, 12/10.T/6.T et préférentiellement 11/10.T/10.I, 11/10.T/10.6, 11/10.T/6.T, 12/10.T/10.I, 12/10.T/10.6 et 12/10.T/6.T.

Dans une version avantageuse de l'invention, le rapport molaire de la somme des motifs A et Z sur le(s) motif(s) 10.T (i.e. (A+Z)/10.T) dans le terpolymère est compris entre 0,05 et 2, et de préférence entre 0,1 et 1.

A la place d'un motif (diamine en Cd).(diacide en Ce), on pourrait également envisager un mélange de deux, trois,... ou plusieurs motif (diamine en Cd).(diacide en Ce) ou un mélange d'un ou plusieurs aminoacides et/ou d'un ou plusieurs lactames avec un ou plusieurs motif (diamine en Cd).(diacide en Ce). Dans cette éventualité, les copolyamides formés comprendraient alors quatre, cinq,... ou plus, motifs, respectivement.

Si, à l'exception de l'acide N-heptyl-11-aminoundécanoïque, les dimères d'acides gras et les diamines cycloaliphatiques, les comonomères ou produits de départ envisagés dans la présente description (aminoacides, diamines, diacides) sont effectivement linéaires, rien n'interdit d'envisager qu'ils puissent en tout ou partie être ramifiés, tel que le 2-méthyl-1,5-diaminopentane, partiellement insaturés.

On notera en particulier que le diacide carboxylique en C18 peut être l'acide octadécanedioïque, qui est saturé, ou bien l'acide octadécènedioïque, qui présente quant-à-lui une insaturation.

Le copolyamide est présent dans la composition en une teneur comprise entre 45 et 95% en poids, de préférence entre 55 et 90% en poids, par rapport au poids total de la composition.

De préférence, le copolyamide présente une température de fusion supérieure à 240°C, avantageusement comprise entre 240°C et 310°C, et plus particulièrement comprise entre 260°C et 280°C.

Le copolyamide compris dans la composition selon l'invention peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être la 1,10-décanediamine ou, lorsqu'ils sont présents, notamment l'acide 11-aminoundécanoïque, les diamines et diacides aliphatiques et linéaires tels que définis ci-dessus.

### Les polyoléfines réticulées

La composition selon l'invention comporte au moins une polyoléfine réticulée, ladite polyoléfine réticulée se présentant comme une phase dispersée dans la matrice formée par le copolyamide A/X.T.

Cette phase dispersée est issue de la réaction :
- d'un produit (A) comprenant un époxyde insaturé,
- d'un produit (B) comprenant un anhydride d'acide carboxylique insaturé ou un acide polycarboxylique, et éventuellement
- d'un produit (C) comprenant un acide carboxylique insaturé ou un acide alpha-oméga-aminocarboxylique.

### Produit (A)

A titre d'exemple de produit (A), on peut citer les polymères contenant de l'éthylène et un époxyde insaturé.

Selon une première forme de l'invention, (A) est soit une polyoléfine greffée par un époxyde insaturé, soit un copolymère de l'éthylène et d'un époxyde insaturé.

Avantageusement, le produit (A) est un copolymère de l'éthylène et d'un époxyde insaturé.

* S'agissant de la polyoléfine greffée par un époxyde insaturé, on entend par polyoléfine, les polymères comprenant des motifs oléfines tels que, par exemple, des motifs éthylène, propylène, butène-1 ou toute autre alpha-oléfine. A titre d'exemple, on peut citer :
- les polyéthylènes tels que les LDPE, HDPE, LLDPE ou VLDPE, le polypropylène, les copolymères éthylène/propylène, les EPR (éthylène/propylène Rubber) ou encore les PE métallocènes (copolymères obtenus par catalyse monosite), ;
- les copolymères blocs styrène/éthylène-butène/styrène (SEBS), les copolymères blocs styrène/butadiène/styrène (SBS), les copolymères blocs styrène/isoprène/styrène (SIS), les copolymères blocs styrène/éthylène-propylène/styrène, les éthylène/propylène/diène (EPDM) ;
- les copolymères de l'éthylène avec au moins un produit choisi parmi les sels d'acides carboxyliques insaturés, les esters d'acides carboxyliques insaturés et les esters vinyliques d'acides carboxyliques saturés.

Avantageusement, la polyoléfine est choisie parmi le LLDPE, le VLDPE, le polypropylène, les copolymères éthylène/acétate de vinyle ou les copolymères éthylène/(méth)acrylate d'alkyle. La densité peut être avantageusement comprise entre 0,86 et 0,965, l'indice de fluidité (MFI) peut être compris entre 0,3 et 40 (en g/10 min à 190°C sous 2,16 kg).

* S'agissant des copolymères de l'éthylène et d'un époxyde insaturé, on peut citer, par exemple, les copolymères de l'éthylène, d'un (méth)acrylate d'alkyle et d'un époxyde insaturé ou les copolymères de l'éthylène, d'un ester vinylique d'acide carboxylique saturé et d'un époxyde insaturé. La quantité d'époxyde peut être jusqu'à 15 % en poids du copolymère (A) et la quantité d'éthylène d'au moins 50 % en poids de (A).

Avantageusement, (A) est un copolymère de l'éthylène, d'un (méth)acrylate d'alkyle et d'un époxyde insaturé.

De préférence, le (méth)acrylate d'alkyle est tel que l'alkyle possède de 2 à 10 atomes de carbone.

Le MFI (indice de fluidité à l'état fondu) de (A) peut être par exemple compris entre 0,1 et 50 (g/10 min à 190°C sous 2,16 kg).

Des exemples d'acrylate ou méthacrylate d'alkyle utilisables sont notamment le méthacrylate de méthyle, l'acrylate d'éthyle, l'acrylate de n-butyle, l'acrylate d'isobutyle et l'acrylate de 2-éthylhexyle.

Des exemples d'époxydes insaturés utilisables sont notamment :
- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Selon une version avantageuse de l'invention, le produit (A) est un copolymère d'éthylène, d'acrylate de méthyle et de méthacrylate de glycidyle. On pourra notamment utiliser le produit commercialisé par la société ARKEMA sous la dénomination LOTADER^{®} AX8900.

Selon une autre forme de l'invention, le produit (A) est un produit ayant deux fonctions époxyde, tel que par exemple le diglycidyl éther du bisphénol A (DGEBA).

### Produit (B)

Selon une première variante de l'invention, le produit (B) est un polymère contenant de l'éthylène et un anhydride d'acide carboxylique insaturé.

Le produit (B) est soit un copolymère de l'éthylène et d'un anhydride d'acide carboxylique insaturé, soit une polyoléfine greffée par un anhydride d'acide carboxylique insaturé.

Comme on l'a vu ci-dessus, la polyoléfine est un polymère comprenant des motifs oléfines tels que des motifs éthylène, propylène, butène-1 ou toute autre alpha-oléfine. Cette polyoléfine peut être notamment choisie parmi les exemples de polyoléfines cités plus haut pour le produit (A), lorsque ce dernier est une polyoléfine greffée par un époxyde insaturé.

Des exemples d'anhydrides d'acide dicarboxylique insaturé utilisables comme constituants du produit (B) sont notamment l'anhydride maléique, l'anhydride itaconique, l'anhydride citraconique et l'anhydride tétrahydrophtalique.

Avantageusement, le produit (B) est un copolymère de l'éthylène et d'un anhydride d'acide carboxylique insaturé.

A titre d'exemples, on peut citer les copolymères de l'éthylène, d'un (méth)acrylate d'alkyle, d'un anhydride d'acide carboxylique insaturé et les copolymères de l'éthylène, d'un ester vinylique d'acide carboxylique saturé et d'un anhydride d'acide carboxylique insaturé.

La quantité d'anhydride carboxylique insaturé peut être jusqu'à 15 % en poids du copolymère (B) et la quantité d'éthylène d'au moins 50 % en poids du copolymère (B).

Ces copolymères peuvent aussi comprendre un (meth)acrylate d'alkyle, cet autre co-monomère pouvant représenter jusqu'à 30% de (B).

Avantageusement, le produit (B) est un copolymère de l'éthylène, d'un (méth)acrylate d'alkyle et d'un anhydride carboxylique insaturé. De préférence, le (méth)acrylate d'alkyle est tel que l'alkyle possède de 2 à 10 atomes de carbone.

L'acrylate ou le méthacrylate d'alkyle peut être choisi parmi ceux cités plus haut pour le produit (A).

Selon une version avantageuse de l'invention, le produit (B) est un copolymère d'éthylène, d'acrylate d'éthyle et d'anhydride maléique. On pourra notamment utiliser le produit commercialisé par la société ARKEMA sous la dénomination LOTADER^{®} 4700.

Le MFI de (B) peut être, par exemple, entre 0,1 et 50 (g/10 min à 190 °C sous 2,16 kg).

Selon une deuxième variante de l'invention, le produit (B) peut être choisi parmi les acides polycarboxyliques aliphatiques, alicycliques ou aromatiques et leurs anhydrides partiels ou totaux.

A titre d'exemples d'acides aliphatiques, on peut citer l'acide succinique, l'acide glutarique, l'acide pimélique, l'acide azélaique, l'acide sébacique, l'acide adipique, l'acide dodécanedicarboxylique, l'acide octadécanedicarboxylique, l'acide dodécènesuccinique et l'acide butanetétracarboxylique.

A titre d'exemples d'acides alicycliques, on peut citer l'acide cyclopentanedicarboxylique, l'acide cyclopentanetricarboxylique, l'acide cyclopentanetétracarboxylique, l'acide cyclohexane dicarboxylique, l'acide hexane tricarboxylique, l'acide méthylcyclopentane dicarboxylique, l'acide tétrahydrophtalique, l'acide endométhylènetétrahydrophtalique et l'acide méthylènedométhylène-tetrahydrophtalique.

A titre d'exemples d'acides aromatiques, on peut citer l'acide phtalique, l'acide isophtalique, l'acide téréphtalique, l'acide triméllitique, l'acide trimésique et l'acide pyromellitique.

A titre d'exemples d'anhydrides, on peut citer les anhydrides partiels ou totaux des acides précédents.

On utilise avantageusement l'acide adipique.

On ne sortirait pas du cadre de l'invention si une partie de l'anhydride maléique du produit (B), selon les première et deuxième variantes décrites ci-dessus, était en partie hydrolysée.

### Produit (C)

Selon une première variante de l'invention, le produit (C) comprend un acide carboxylique insaturé.

On peut citer à titre d'exemple les produits (B) hydrolysés.

Le produit (C) est, par exemple, un copolymère de l'éthylène et d'un acide carboxylique insaturé et, avantageusement, un copolymère de l'éthylène et de l'acide (méth)acrylique.

On peut encore citer les copolymères de l'éthylène, d'un (méth)acrylate d'alkyle et de l'acide acrylique.

Selon une version avantageuse de l'invention, le produit (C) est un copolymère d'éthylène, d'acrylate de butyle et d'acide acrylique. On pourra notamment utiliser le produit commercialisé par la société BASF sous la dénomination LUCALENE^{®} 3110.

Ces copolymères ont un MFI entre 0,1 et 50 (g/10 min à 190°C sous 2,16 kg).

La quantité d'acide peut être jusqu'à 10% en poids et, de préférence, de 0,5 à 5% en poids de (C). La quantité de (méth)acrylate d'alkyle est de 5 à 40% en poids de (C).

Selon une deuxième variante de l'invention, le produit (C) peut aussi être choisi parmi les acides alpha-oméga-aminocarboxyliques, tels que, par exemple, NH₂-(CH₂)₅COOH, NH₂-(CH₂)₁₀COOH et NH₂(CH₂)₁₁-COOH et, de préférence, l'acide 11-aminoundécanoïque.

La proportion de (A) et (B) nécessaire pour former la phase réticulée est déterminée selon les règles habituelles de l'art par le nombre de fonctions réactives présentes dans (A) et dans (B).

Dans tous les cas, la proportion pondérale en produits (A), (B) et, le cas échéant, (C) est comprise entre 5 et 55% en poids, avantageusement entre 10 et 45% en poids, par rapport au poids total de la composition selon l'invention.

Dans une variante avantageuse de l'invention, les proportions pondérales des produits (A), (B) et, le cas échéant, (C) sont respectivement les suivantes, par rapport au poids total de la composition :
- la proportion pondérale du produit (A) est comprise entre 2 et 15% en poids,
- la proportion pondérale du produit (B) est comprise entre 3 et 40% en poids, et
- la proportion pondérale du produit (C) est comprise entre 0 et 12% en poids.

La proportion pondérale du produit (A) est avantageusement comprise entre 3 et 12% en poids et, de préférence, entre 4 et 10% en poids, par rapport au poids total de la composition.

La proportion pondérale du produit (B) est avantageusement comprise entre 5 et 38% en poids et, de préférence, entre 6 et 36% en poids, par rapport au poids total de la composition.

La proportion pondérale du produit (C) est avantageusement comprise entre 2 et 10% en poids et, de préférence, entre 3 et 8% en poids, par rapport au poids total de la composition.

Par exemple, dans les phases réticulées contenant (C) choisies parmi les acides alpha-oméga-aminocarboxyliques, si (A) est un copolymère de l'éthylène, d'un (méth)acrylate d'alkyle et d'un époxyde insaturé et (B) un copolymère de l'éthylène, d'un (méth)acrylate d'alkyle et d'un anhydride d'acide carboxylique insaturé, les proportions sont telles que le rapport entre les fonctions anhydride et les fonctions époxy soit voisin de 1.

La quantité d'acide alpha-oméga-aminocarboxylique est alors de 0,1 à 3 % en poids, et de préférence 0,5 à 1,5 % en poids de (A) et (B).

S'agissant de (C) comprenant un acide carboxylique insaturé, c'est-à-dire (C) étant choisi, par exemple, parmi les copolymères éthylène/(méth)acrylate d'alkyle/acide acrylique, la quantité de (C) et (B) peut être choisie de telle sorte que le nombre de fonctions acide et de fonctions anhydride soit au moins égal au nombre de fonctions époxyde. Avantageusement, on utilise des produits (B) et (C) tels que (C) représente de 20 à 80 % en poids de (B) et, de préférence, de 20 à 50 % en poids.

On ne sortirait pas du cadre de l'invention, si on ajoutait un catalyseur.

Ces catalyseurs sont généralement utilisés pour les réactions entre les époxys et les anhydrides.

Parmi les composés capables d'accélérer la réaction entre la fonction époxy présente dans (A) et la fonction anhydride ou acide présente dans (B), on peut citer notamment :
- des amines tertiaires telles que la diméthyllaurylamine, la diméthylstéarylamine, la N-butylmorpholine, la N,N-diméthyl cyclohexylamine, la benzyldiméthylamine, la pyridine, la diméthyl amino-4-pyridine, le méthyl-1-imidazole, la tétraméthyléthyl hydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine ;
- le 1,4-diazabicyclo[2,2,2]octane (DABCO) ;
- des phosphines tertiaires telles que la triphénylphosphine ;
- des alkyldithiocarbamates de zinc.

La quantité de ces catalyseurs est avantageusement de 0,1 à 3 % en poids, et de préférence 0,5 à 1 % en poids de (A) + (B) + (C).

Avantageusement, la (ou les) polyoléfine(s) réticulée(s) provien(nen)t de la réaction des trois produits (A), (B) et (C).

La composition selon l'invention comprend de 5% à 55% en poids, par rapport au poids total de la composition, d'au moins une polyoléfine réticulée.

De préférence, la composition comprend de 10% à 45% en poids, par rapport au poids total de la composition, d'au moins une polyoléfine réticulée.

### Les polymères supplémentaires

Une composition conforme à l'invention peut en outre comprendre des polymères supplémentaires, et notamment au moins un troisième polymère, un tel polymère étant distinct des polyoléfines réticulées et des polyamides semi-aromatiques mentionnés ci-avant.

Avantageusement, ce troisième polymère peut être choisi parmi un polyamide semi-cristallin, un polyamide amorphe, un copolyamide semi-cristallin, un copolyamide amorphe, un polyamide-bloc-éther, un polyétheramide, un polyesteramide, un polysulfure de phénylène (PPS), un polyphénylène oxyde (PPO), une polyoléfine non réticulée, par opposition à une polyoléfine réticulée envisagée ci-avant, cette polyoléfine non réticulée pouvant être fonctionnelle ou non fonctionnelle, un polymère fluoré tel que les PTFE, ETFE, PVDF, et leurs mélanges.

S'agissant des polyoléfines non réticulées, on peut citer les polyoléfines décrites dans le chapitre "*les polyoléfines réticulées*" qui sont destinées à être greffées par des groupes réactifs. On peut notamment citer les produits (A) ou (B) ou (C) mais utilisés seuls pour ne pas réticuler. A titre d'exemple, on peut citer les élastomères EPR, EPDM, ces élastomères pouvant être greffés pour faciliter leur compatibilisation avec le copolyamide. On peut encore citer les élastomères acryliques, par exemple ceux du type NBR, HNBR, X-NBR.

Le troisième polymère peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoates.

De préférence, le troisième polymère est choisi parmi les polyamides aliphatiques et les polyamides-bloc-éthers.

La composition peut contenir jusqu'à 20% en poids, par rapport au poids total de la composition, d'au moins un troisième polymère.

### Les additifs

La composition selon l'invention peut également comprendre en outre au moins un additif.

Cet additif peut notamment être choisi parmi des arylamides, les fibres, les stabilisants à la lumière (notamment UV et/ou à la chaleur), les plastifiants, les colorants, les agents de démoulage, les agents d'ignifugation, les charges habituelles (telles que talc, fibres de verre, nanocharges, pigments, oxydes métalliques, métaux), les modifiants chocs, les agents tensioactifs, les azurants optiques, les anti-oxydants, les cires naturelles et leurs mélanges.

Les charges envisagées dans le cadre de la présente invention incluent les charges minérales classiques, telles que les charges choisies dans le groupe, donné à titre non-limitatif, comprenant la silice, le noir de carbone, les fibres de carbone, les nanotubes de carbone, le graphite expansé, l'oxyde de titane, les billes de verre, le kaolin, la magnésie et les scories. La charge utilisée plus généralement est formée de fibres de verre, dont la dimension est avantageusement comprise entre 0,20 et 25 mm. On peut y inclure un agent de couplage pour améliorer l'adhésion des fibres au copolyamide, tels que les silanes ou les titanates, qui sont connus de l'homme de l'art. Des charges anioniques peuvent également être utilisées, telles que le graphite ou les fibres aramides (polyamides entièrement aromatiques).

Les charges peuvent être présentes en une teneur comprise entre 0 et 50% en poids et, de préférence, entre 0 et 30% en poids.

L'invention porte également sur un procédé de préparation d'une composition telle que définie ci-dessus. Selon ce procédé, la composition peut être préparée par toute méthode qui rend possible l'obtention d'un mélange homogène contenant la composition selon l'invention, et éventuellement d'autres additifs, telle que l'extrusion à l'état fondu, le compactage ou encore le malaxeur à rouleaux.

Plus particulièrement, la composition selon l'invention est préparée par mélange à l'état fondu de tous les ingrédients dans un procédé dit en direct. Ainsi, le copolyamide et les composés permettant d'obtenir la (ou les) polyoléfine(s) réticulée(s), en particulier les produits (A), (B) et éventuellement (C). Les éventuels polymères supplémentaires et/ou additifs peuvent, quant-à-eux, être introduits, soit en même temps que le copolyamide et les autres ingrédients tels que les produits (A), (B) et , le cas échéant, (C), soit lors d'une étape ultérieure.

Avantageusement, la composition peut être obtenue sous forme de granulés par compoundage sur un outil connu de l'homme de l'art tel qu'une extrudeuse bi-vis, un comalaxeur ou un mélangeur interne.

La composition selon l'invention obtenue par le procédé de préparation décrit ci-dessus peut être ensuite transformée pour une utilisation ou une transformation ultérieure connue par l'homme de l'art à l'aide d'outils tels qu'une presse à injecter ou une extrudeuse.

L'invention porte ainsi aussi sur un matériau ou article obtenu à partir d'au moins une composition telle que définie ci-dessus par un procédé de transformation connu tel que l'injection, l'extrusion, l'extrusion-soufflage, la co-extrusion ou la multi-injection.

Le procédé de préparation de la composition selon l'invention peut aussi utiliser une extrudeuse bi-vis alimentant, sans granulation intermédiaire, une presse à injecter ou une extrudeuse selon un dispositif de mise en oeuvre connu par l'homme de l'art.

La composition selon l'invention peut être utilisée pour constituer une poudre ou bien des granulés. Elle peut également être utilisée pour constituer une structure pour des utilisations ou des transformations ultérieures.

Cette structure peut être monocouche lorsqu'elle n'est formée que de la composition selon l'invention.

Cette structure peut également être une structure multicouche, lorsqu'elle comprend au moins deux couches et que l'une au moins des différentes couches formant la structure est formée de la composition selon l'invention.

La poudre, les granulés ou bien la structure, qu'elle soit monocouche ou multicouche, peuvent se présenter sous la forme de fibres (par exemple pour former un tissé ou un non tissé), d'un film, d'un tube, de filaments, d'un objet moulé, d'un objet tridimensionnel (obtenu par une technologie d'agglomération de poudre par fusion ou frittage provoqué par un rayonnement), d'un corps creux ou d'une pièce injectée.

Par exemple, les films et feuilles peuvent être utilisés dans des domaines aussi variés que celui de l'électronique ou de la décoration.

La composition selon l'invention peut avantageusement être envisagée pour la réalisation de tout ou partie d'éléments de biens d'équipements électriques et électroniques, tels que solénoïdes encapsulés, pompes, téléphones, ordinateurs, systèmes multimédias, des équipements automobiles tels que tubes, connecteurs de tubes, pompes, des pièces injectées sous capot moteur, du matériel chirurgical, de l'emballage ou encore des articles de sport ou de loisirs, comme dans les équipements de vélo (selle, pédales).

Plus particulièrement, ces éléments d'équipements automobiles, lorsqu'ils présentent la forme de tubes et/ou de connecteurs, peuvent en particulier être utilisés dans des dispositifs d'admission d'air, de refroidissement (par exemple par air, liquide de refroidissement,...), de transport ou transfert de carburants ou de fluides (tels que huile, eau,...). De tels éléments peuvent bien évidemment être rendus antistatiques ou conducteurs, par addition préalable de quantités adaptées de charges conductrices (telles que noir de carbone, fibres de carbone, nanotubes de carbone,...) dans la composition selon l'invention.

La composition selon l'invention peut également être envisagée pour la réalisation de tout ou partie d'éléments d'équipement (notamment tubes, tuyaux, connecteurs, pompes,...) de transport ou transfert de gaz, de pétrole et de ses composés, en particulier destinés à une utilisation dans le domaine de l'Off Shore.

A titre d'exemples, lorsque la composition selon l'invention se trouve sous forme de poudre, celle-ci peut être utilisée dans des revêtements, et notamment les revêtements à résistance thermique améliorée destinés à recouvrir des pièces métalliques utilisées dans le transport de fluides (eau, produits chimiques, pétrole et gaz...), utilisée dans le domaine automobile, par exemple sous capot moteur, et/ou le domaine industriel, notamment les pièces de moteur. Ces poudres peuvent être appliquées sur divers supports par les technologies connues (par exemple, par trempage, par application au moyen d'un pistolet) pour former ce revêtement. Les poudres selon l'invention peuvent également être utilisées en tant qu'additifs et/ou charges dans des peintures nécessitant une température de cuisson élevée, c'est-à-dire supérieure à 180°C. Ces poudres peuvent être utilisées dans les compositions anti-corrosion, dans les compositions anti-abrasion et/ou dans les peintures. Les poudres selon l'invention peuvent encore être utilisées dans les technologies d'agglomération de poudre par fusion ou frittage provoqué par un rayonnement, tel que par exemple un faisceau laser (« laser sintering ») ou un faisceau infrarouge (« IR sintering »), pour fabriquer des objets. Lesdites poudres peuvent en outre être utilisées comme additifs pour le papier, ou bien dans les gels d'électrophorèse, ou en tant qu'espaceurs dans les matériaux composites multicouches, notamment entre les couches de matériaux multicouches. Leurs utilisations dans l'industrie de l'emballage, des jouets, du textile, l'automobile, l'électronique, les cosmétiques, la pharmacie et la parfumerie sont envisageables.

A titre d'exemples, les granulés comprenant la composition selon l'invention sont utilisés pour la fabrication, notamment par extrusion, de filaments, de tubes, de films et/ou d'objets moulés.

D'autres buts et avantages de la présente invention apparaîtront à la lecture des exemples suivants donnés à titre indicatif et nullement limitatif.

### [Exemples]

### -A- Etude comparative de la mise en oeuvre (préparation) en fonction du taux d'amine

### Formulation des compositions

Trois compositions A, B et B' sont préparées comprenant, comme copolyamide, un PA 11/10.T de ratio molaire 11/10.T égal à 0.7, obtenu par polycondensation d'acide 11-aminoundécanoïque, de 1,10-décanediamine et d'acide téréphtalique.

Ce copolyamide est obtenu selon trois voies de synthèse différentes conduisant à trois copolyamides différents notés PA1 pour le copolyamide selon l'invention et PA2, PA2' pour les copolyamides comparatifs. Il est précisé que le copolyamide PA2' correspond au copolyamide 11/10.T obtenu dans les conditions de l'exemple 1 du document EP 1 505 099.

Les caractéristiques de ces trois copolyamides figurent dans le Tableau 1 ci-dessous :

**Tableau 1**

| | PA1 invention | PA2 comparatif | PA2' comparatif |
|---|---|---|---|
| Fins de chaînes CH₃ par RMN (meq/g) | 0.105 | 0 | 0.017 |
| NH₂ par RMN (meq/g) | 0.037 | 0.135 | 0.014 |
| COOH par RMN (meq/g) | 0.044 | 0.026 | 0.107 |
| Ip par GPC | 2.88 | 2.94 | 4.5 |
| Visco inhérente | 1.17 | 1.21 | 1.27 |

La viscosité inhérente (notée η) est mesurée selon la norme ISO 307.

Le copolyamide PA2 diffère du copolyamide PA1 selon l'invention par la forte teneur en fins de chaîne amine tandis que le copolyamide PA2' s'en distingue par une teneur en fins de chaîne amine qui est au contraire inférieure.

Les compositions A, B et B' sont préparées sur extrudeuse bi-vis selon les formulations suivantes figurant dans le Tableau 2, la teneur en polyoléfine réticulée étant égale à 30% en poids du poids total de chacune des compositions A, B et B' :

**Tableau 2**

| Composition pondérale | A invention | B comparative | B' comparative |
|---|---|---|---|
| 11/10.T : PA1 | 69.3 | - | - |
| 11/10.T : PA2 | - | 69.3 | - |
| 11/10.T : PA2' | - | - | 69.3 |
| Lotader 4700 | 15 | 15 | 15 |
| Lotader AX8900 | 7.5 | 7.5 | 7.5 |
| Lucalène 3110 | 7.5 | 7.5 | 7.5 |
| Iodine 201 | 0.7 | 0.7 | 0.7 |

avec
- Lotader 4700 : copolymère d'éthylène, d'acrylate d'éthyle et d'anhydride maléique (coPE/EA/MAH - 69/30/1 en poids)
- Lotader AX8900 : copolymère d'éthylène, d'acrylate de méthyle et de méthacrylate de glycidyle (coPE/MA/GMA - 68/24/8 en poids)
- Lucalène 3110 : copolymère d'éthylène, d'acrylate de butyle et d'acide acrylique (coPE/BuA/AA - 88/8/4 en poids)
- Iodine 201 : additif antioxydant à base de KI et de CuI

### Etude de la préparation des compositions

Les compositions A, B et B' sont compoundées de façon classique et connue de l'homme du métier.

Les mesures en pression en tête reportées dans le Tableau 3 ci-dessous montrent que la composition comparative B n'est pas aisément compoundable. En effet, la pression en tête et le couple appliqué sont trop élevés.

La composition comparative B' est quant-à-elle compoundable.

**Tableau 3**

| Compositions | A invention | B comparative | B' comparative |
|---|---|---|---|
| Pression en tête en bars (mini - maxi) | 20 - 26 | 41 - 59 | 31 - 39 |
| Couple en % (mini - maxi) | 60 - 78 | 82 - 103 | 63 - 75 |

### -B- Etude comparative de la mise en oeuvre (transformation) en fonction du taux d'amine et de l'indice de polymolécularité

Le Tableau 4 ci-dessous décrit différents copolyamides PA 11/10.T présentant tous un ratio molaire 11/10.T égal à 0.7 (comme dans le Tableau 1).

Le Tableau 5 reprend la composition B' du Tableau 2 ainsi que détaille les compositions C à G obtenues dans les mêmes conditions que les compositions figurant au Tableau 2. Le Tableau 5 mentionne également les valeurs de MFI (mesurées à 300°C, avec un poids de 5kg), de viscosité des compositions B' et C à G ainsi que des observations quant à la transformation par extrusion de ces dernières sous forme de tubes et les valeurs de ½ vie à 170°C d'haltères conformes à la norme ISO 527 1 BA (transformation par injection) et obtenus à partir de ces mêmes compositions B' et C à G.

Il est précisé que la viscosité plan-plan mesurée en Pa.s est réalisée à 300°C (10 rad/s) pendant 30 minutes.

La ½ vie correspond à la durée au bout de laquelle la valeur initiale de l'allongement à la rupture est divisée par 2.

**Tableau 4**

| 11/10.T | NH2 (meq/q) | COOH (meq/g) | CH3 (meq/g) | Ip | compoundage |
|---|---|---|---|---|---|
| PA2' comparatif | 0.014 | 0.107 | 0.017 | 4.5 | OK |
| PA3 invention | 0.027 | 0.059 | 0.104 | 3.5 | OK |
| PA4 invention | 0.044 | 0.044 | 0.105 | 2.9 | OK |
| PA5 invention | 0.058 | 0.036 | 0.106 | 3.5 | OK |
| PA6 comparatif | 0.058 | 0.060 | 0.092 | 4.1 | OK |
| PA7 comparatif | 0.135 | 0.015 | 0 | 3.0 | gels |

**Tableau 5**

| Composition | MFI (g/10 min) | Viscosité initiale plan-plan (PA.s) | Viscosité après 30' plan-plan (Pa.s) | Transformation en tubes 8×1 mm | ½ Vie à 170°C (haltères ISO 527 1 BA) |
|---|---|---|---|---|---|
| B' avec PA2' comparative | 7.5 | 3035 | 3425 | Difficile (tube rugueux, présence de volatiles) | 250h |
| C avec PA3 invention | 5.8 | 3328 | 4055 | OK | 350h |
| D avec PA4 invention | 3.3 | 4160 | 5141 | OK | 500h |
| E avec PA5 invention | 2.2 | 3590 | 7380 | OK | 600h |
| F avec PA6 comparative | 0.28 | 8300 | 12300 | Impossible après arrêt de 10 min | nc* |
| G avec PA7 comparative | 0.1 | 12000 | 29050 | Impossible | 750h |

| | | | | | |
|---|---|---|---|---|---|
| (*) "nc" signifie non communiqué. | | | | | |

Nous montrons ainsi que lorsque l'Ip ou la teneur en fins de chaînes amine des copolyamides (PA6 et PA7) a une valeur supérieure à celle d'un copolyamide selon l'invention (PA3, PA4 ou PA5), les compositions les contenant ont une viscosité qui évolue à chaud et qui rend leur transformation par extrusion en un matériau sous forme de tube difficile, voire impossible.

Par ailleurs, lorsque la teneur en fin de chaînes amine du copolyamide (PA2') est inférieure à celle d'un copolyamide selon l'invention (PA3, PA4 ou PA5) et que l'Ip est supérieur à celui d'un copolyamide selon l'invention, la transformation par extrusion en un matériau sous forme de tube à partir de la composition correspondante B' devient également plus difficile qu'avec une composition conforme à l'invention (C, D ou E), notamment du fait de la fluidité de cette composition B' : on obtient un tube qui présente un aspect rugueux. De plus, lors de la transformation, on observe un dégagement de fumées.

En outre, en référence aux valeurs de ½ vie à 170°C, on constate que le matériau obtenu à partir de la composition B' présente des propriétés thermomécaniques moins performantes que celles des matériaux obtenus à partir des compositions C, D et E conformes à l'invention.

## Revendications

1. Composition comprenant :
- entre 45 et 95% en poids, par rapport au poids total de la composition, d'un copolyamide semi-aromatique comprenant au moins deux motifs distincts répondant à la formulation générale suivante :
A/X.T
dans laquelle
A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atomes de carbone du diacide, a et b étant chacun compris entre 4 et 36 ;
X.T désigne un motif obtenu à partir de la polycondensation d'une diamine en Cx et de l'acide téréphtalique, avec x représentant le nombre d'atomes de carbone de la diamine en Cx, x étant compris entre 4 et 36,
ledit copolyamide présentant un indice de polymolécularité, noté Ip, inférieur ou égal à 3,5, mesuré par chromatographie de perméation de gel (en langue anglaise : Gel Permeation Chromatography),
ledit copolyamide présentant une teneur en fins de chaîne amine comprise entre 0,020 meq/g et 0,058 meq/g ; et
- de 5% à 55% en poids, par rapport au poids total de la composition, d'au moins une polyoléfine réticulée se présentant comme une phase dispersée dans la matrice formée par le copolyamide A/X.T, ladite phase dispersée provenant de la réaction :
. d'un produit (A) comprenant un époxyde insaturé,
. d'un produit (B) comprenant un anhydride d'acide carboxylique insaturé ou un acide polycarboxylique, et éventuellement
. d'un produit (C) comprenant un acide carboxylique insaturé ou un acide alpha-oméga-aminocarboxylique.

2. Composition selon la revendication 1, **caractérisée en ce que** le copolyamide présente un indice de polymolécularité compris entre 2 et 3,5.

3. Composition selon la revendication 1 ou 2, **caractérisée en ce que** le copolyamide présente une teneur en fin de chaîne amine compris entre 0,030 et 0,050 meq/g.

4. Composition selon l'une quelconque des revendications 1 à 3, **caractérisée en ce que** le copolyamide présente une température de fusion supérieure à 240°C, comprise avantageusement entre 240°C et 310°C, de préférence entre 260°C et 280°C.

5. Composition selon l'une quelconque des revendications 1 à 4, **caractérisée en ce que** le motif A est de nature aliphatique.

6. Composition selon l'une quelconque des revendications 1 à 5, **caractérisée en ce que** le motif X désigne une diamine comportant entre 9 et 18 atomes de carbone.

7. Composition selon l'une quelconque des revendications 1 à 6, **caractérisée en ce que** le copolyamide est choisi parmi 11/10.T, 12/10.T, 6.10/10.T, 6.12/10.T, 10.10/10.T, 10.12/10.T, 12.12/10.T, 11/10.T/12, 11/10.T/6, 12/10.T/6, 11/10.T/10.I, 11/10.T/10.6, 11/10.T/6.T, 12/10.T/10.I, 12/10.T/10.6 et 12/10.T/6.T.

8. Composition selon l'une quelconque des revendications 1 à 7, **caractérisée en ce que**, par rapport au poids total de la composition :
- la proportion pondérale du produit (A) est comprise entre 2 et 15% en poids,
- la proportion pondérale du produit (B) est comprise entre 3 et 40% en poids, et
- la proportion pondérale du produit (C) est comprise entre 0 et 12% en poids.

9. Composition selon l'une quelconque des revendications 1 à 8, **caractérisé en ce que** la composition comprend jusqu'à 20% en poids d'au moins un polymère supplémentaire choisi parmi un polyamide aliphatique, une polyoléfine non réticulée, un polymère fluoré, un polysulfure de phénylène, un polyphénylène oxyde et un polyamide-bloc-éther.

10. Composition selon l'une quelconque des revendications 1 à 9, **caractérisée en ce qu'**elle comprend au moins un additif choisi parmi les arylamides, les fibres, les stabilisants à la lumière, notamment UV et/ou à la chaleur, les plastifiants, les colorants, les agents de démoulage, les agents d'ignifugation, les charges habituelles telles que talc, fibres de verre, nanocharges, pigments, oxydes métalliques, métaux, les modifiants chocs, les agents tensioactifs, les azurants optiques, les anti-oxydants, les cires naturelles et leurs mélanges.

11. Procédé de préparation de la composition telle que définie à l'une quelconque des revendications 1 à 10, **caractérisée en ce que** la composition est préparée par mélange à l'état fondu de tous les ingrédients.

12. Utilisation d'une composition telle que définie à l'une quelconque des revendications 1 à 10 pour constituer une poudre, des granulés, une structure monocouche ou au moins une couche d'une structure multicouche.

13. Utilisation selon la revendication 12, **caractérisée en ce que** la poudre, les granulés, la structure monocouche ou bien la structure multicouche se présentent sous la forme de fibres, d'un film, d'un tube, de filaments, d'un objet moulé, d'un objet tridimensionnel obtenu par technologie d'agglomération de poudre par fusion ou frittage provoqué par un rayonnement, d'un corps creux ou d'une pièce injectée.

14. Utilisation de la composition selon l'une quelconque des revendications 1 à 10 pour la réalisation de tout ou partie d'éléments de biens d'équipements électriques, électroniques, automobiles ou de transport ou transfert de gaz, de pétrole et de ses composés, en particulier destinés à une utilisation dans le domaine de l'Off Shore.

15. Utilisation selon la revendication 14, **caractérisée en ce que** lorsque ces élément d'équipements automobiles se trouvent sous forme de tubes et/ou de connecteurs, ils sont utilisés dans des dispositifs d'admission d'air, de refroidissement, de transport ou de transfert de carburants ou de fluides tels que eau ou huile.

## Patentansprüche

1. Zusammensetzung, umfassend:
- zwischen 45 und 95 Gew.-%, bezogen auf das Gesamtgewicht der Zusammensetzung, eines teilaromatischen Copolyamids mit mindestens zwei verschiedenen Einheiten, die der folgenden allgemeinen Formel entsprechen:
A/X.T,
worin
A aus einer aus einer Aminosäure erhaltenen Einheit, einer aus einem Lactam erhaltenen Einheit und einer Einheit der Formel (Ca-Diamin).(Cb-Disäure) ausgewählt ist, wobei a für die Zahl der Kohlenstoffatome des Diamins steht und b für die Zahl der Kohlenstoffatome der Disäure steht, wobei a und b jeweils zwischen 4 und 36 liegen;
X.T für eine aus der Polykondensation von einem Cx-Diamin und Terephthalsäure erhaltene Einheit steht, wobei x für die Zahl der Kohlenstoffatome des Cx-Diamins steht, wobei x zwischen 4 und 36 liegt,
wobei das Copolyamid einen durch Gelpermeationschromatographie gemessenen Polymolekularitätsindex, der als Ip bezeichnet wird, kleiner gleich 3,5 aufweist,
wobei das Copolyamid einen Gehalt an Amin-Kettenenden zwischen 0,020 meq/g und 0,058 meq/g aufweist; und
- 5 bis 55 Gew.-%, bezogen auf das Gesamtgewicht der Zusammensetzung, mindestens eines vernetzten Polyolefins, das als disperse Phase in der durch das A/X.T-Copolyamid gebildeten Matrix vorliegt, wobei die disperse Phase aus der Umsetzung
. eines Produkts (A), das ein ungesättigtes Epoxid umfasst,
. eines Produkts (B), das ein ungesättigtes Carbonsäureanhydrid oder eine Polycarbonsäure umfasst, und gegebenenfalls
. eines Produkts (C), das eine ungesättigte Carbonsäure oder eine alpha,omega-Aminocarbonsäure umfasst,
stammt.

2. Zusammensetzung nach Anspruch 1, **dadurch gekennzeichnet, dass** das Copolyamid einen Polymolekularitätsindex zwischen 2 und 3,5 aufweist.

3. Zusammensetzung nach Anspruch 1 oder 2, **dadurch gekennzeichnet, dass** das Copolyamid einen Gehalt an Amin-Kettenenden zwischen 0,030 meq/g und 0,050 meq/g aufweist.

4. Zusammensetzung nach einem der Ansprüche 1 bis 3, **dadurch gekennzeichnet, dass** das Copolyamid einen Schmelzpunkt von mehr als 240°C, vorteilhafterweise zwischen 240°C und 310°C und vorzugsweise zwischen 260°C und 280°C aufweist.

5. Zusammensetzung nach einem der Ansprüche 1 bis 4, **dadurch gekennzeichnet, dass** die Einheit A aliphatisch ist.

6. Zusammensetzung nach einem der Ansprüche 1 bis 5, **dadurch gekennzeichnet, dass** die Einheit X für ein Diamin mit zwischen 9 und 18 Kohlenstoffatomen steht.

7. Zusammensetzung nach einem der Ansprüche 1 bis 6, **dadurch gekennzeichnet, dass** das Copolyamid aus 11/10.T, 12/10.T, 6.10/10.T, 6.12/10.T, 10.10/10.T, 10.12/10.T, 12.12/10.T, 11/10.T/12, 11/10.T/6, 12/10.T/6, 11/10.T/10.I, 11/10.T/10.6, 11/10.T/6.T, 12/10.T/10.I, 12/10.T/10.6 und 12/10.T/6.T ausgewählt ist.

8. Zusammensetzung nach einem der Ansprüche 1 bis 7, **dadurch gekennzeichnet, dass**, bezogen auf das Gesamtgewicht der Zusammensetzung:
- der Gewichtsanteil des Produkts (A) zwischen 2 und 15 Gew.-% liegt,
- der Gewichtsanteil des Produkts (B) zwischen 3 und 40 Gew.-% liegt und
- der Gewichtsanteil des Produkts (C) zwischen 0 und 12 Gew.-% liegt.

9. Zusammensetzung nach einem der Ansprüche 1 bis 8, **dadurch gekennzeichnet, dass** die Zusammensetzung bis zu 20 Gew.-% mindestens eines zusätzlichen Polymers, das aus einem aliphatischen Polyamid, einem unvernetzten Polyolefin, einem Fluorpolymer, einem Polyphenylensulfid, einem Polyphenylenoxid und einem Polyamid-block-ether ausgewählt ist, umfasst.

10. Zusammensetzung nach einem der Ansprüche 1 bis 9, **dadurch gekennzeichnet, dass** sie mindestens ein Additiv, das aus Arylamiden, Fasern, Lichtschutzmitteln, insbesondere UV-Stabilisatoren und/oder Wärmestabilisatoren, Weichmachern, Farbmitteln, Formtrennmitteln, Flammschutzmitteln, üblichen Füllstoffen wie Talk, Glasfasern, Nanofüllstoffen, Pigmenten, Metalloxiden, Metallen, Schlagzähigkeitsmodifikatoren, Tensiden, optischen Aufhellern, Antioxidantien, natürlichen Wachsen und Mischungen davon ausgewählt ist, umfasst.

11. Verfahren zur Herstellung der Zusammensetzung gemäß einem der Ansprüche 1 bis 10, **dadurch gekennzeichnet, dass** die Zusammensetzung durch Mischen aller Bestandteile in der Schmelze hergestellt wird.

12. Verwendung einer Zusammensetzung gemäß einem der Ansprüche 1 bis 10 zur Bildung eines Pulvers, eines Granulats, einer Einschichtstruktur oder mindestens einer Schicht einer Mehrschichtstruktur.

13. Verwendung nach Anspruch 12, **dadurch gekennzeichnet, dass** das Pulver, das Granulat, die Einschichtstruktur oder die Mehrschichtstruktur in Form von Fasern, in Form eines Films, in Form eines Rohrs, in Form von Filament, in Form eines Formkörpers, in Form eines durch die Technik der Pulveragglomeration durch strahlungsinduziertes Schmelzen oder Sintern erhaltenen dreidimensionalen Objekts, in Form eines Hohlkörpers oder in Form eines Formteils vorliegt.

14. Verwendung der Zusammensetzung nach einem der Ansprüche 1 bis 10 zur vollständigen oder teilweisen Herstellung von Elementen für Elektro-, Elektronik- und Fahrzeugeinrichtungsgegenständen oder für den Transport oder Transfer von Gasen, Erdöl und Verbindungen davon, insbesondere zur Verwendung im Offshore-Bereich.

15. Verwendung nach Anspruch 14, **dadurch gekennzeichnet, dass** diese Fahrzeugeinrichtungen dann, wenn sie in Form von Rohren und/oder Verbindern vorliegen, in Lufteinlassvorrichtungen, Kühlvorrichtungen, Vorrichtungen für den Transport oder Transfer von Kraftstoffen oder Fluiden wie Wasser oder Öl verwendet werden.

## Claims

1. Composition comprising:
- from 45% to 95% by weight, relative to the total weight of the composition, of a semiaromatic copolyamide comprising at least two different units corresponding to the following general formula:
A/X.T,
in which
A is chosen from a unit obtained from an amino acid, a unit obtained from a lactam and a unit corresponding to the formula (Ca diamine).(Cb diacid), with a representing the number of carbon atoms in the diamine and b representing the number of carbon atoms in the diacid, a and b each being between 4 and 36;
X.T denotes a unit obtained from the polycondensation of a Cx diamine and from terephthalic acid, with x representing the number of carbon atoms in the Cx diamine, x being between 4 and 36,
said copolyamide having a polydispersity index, noted as Ip, of less than or equal to 3.5, measured by gel permeation chromatography,
said copolyamide having a content of amine chain ends of between 0.020 meq/g and 0.058 meq/g; and
- from 5% to 55% by weight, relative to the total weight of the composition, of at least one crosslinked polyolefin being in the form of a phase dispersed in the matrix formed by the copolyamide A/X.T, said dispersed phase being derived from the reaction:
- of a product (A) comprising an unsaturated epoxide,
- of a product (B) comprising an unsaturated carboxylic acid anhydride or a polycarboxylic acid, and optionally
- of a product (C) comprising an unsaturated carboxylic acid or an α,ω-aminocarboxylic acid.

2. Composition according to Claim 1, **characterized in that** the copolyamide has a polydispersity index of between 2 and 3.5.

3. Composition according to Claim 1 or 2, **characterized in that** the copolyamide has a content of amine chain ends of between 0.030 and 0.050 meq/g.

4. Composition according to any one of Claims 1 to 3, **characterized in that** the copolyamide has a melting point of greater than 240°C, advantageously between 240°C and 310°C and preferably between 260°C and 280°C.

5. Composition according to any one of Claims 1 to 4, **characterized in that** the unit A is of aliphatic nature.

6. Composition according to any one of Claims 1 to 5, **characterized in that** the unit X denotes a diamine comprising between 9 and 18 carbon atoms.

7. Composition according to any one of Claims 1 to 6, **characterized in that** the copolyamide is chosen from 11/10.T, 12/10.T, 6.10/10.T, 6.12/10.T, 10.10/10.T, 10.12/10.T, 12.12/10.T, 11/10.T/12, 11/10.T/6, 12/10.T/6, 11/10.T/10.I, 11/10.T/10.6, 11/10.T/6.T, 12/10.T/10.I, 12/10.T/10.6 and 12/10.T/6.T.

8. Composition according to any one of Claims 1 to 7, **characterized in that**, relative to the total weight of the composition:
- the weight proportion of product (A) is between 2% and 15% by weight,
- the weight proportion of product (B) is between 3% and 40% by weight, and
- the weight proportion of product (C) is between 0 and 12% by weight.

9. Composition according to any one of Claims 1 to 8, **characterized in that** the composition comprises up to 20% by weight of at least one additional polymer chosen from an aliphatic polyamide, a noncrosslinked polyolefin, a fluoropolymer, a polyphenylene sulfide, a polyphenylene oxide and a polyamide-block-ether.

10. Composition according to any one of Claims 1 to 9, **characterized in that** it comprises at least one additive chosen from arylamides, fibers, light stabilizers, especially UV stabilizers and/or heat stabilizers, plasticizers, colorants, mold-release agents, flame retardants, the usual fillers such as talc, glass fibers, nanofillers, pigments, metal oxides, metals, impact modifiers, surfactants, optical brighteners, antioxidants and natural waxes, and mixtures thereof.

11. Process for preparing the composition as defined in any one of Claims 1 to 10, **characterized in that** the composition is prepared by mixing into the melt all the ingredients.

12. Use of a composition as defined in any one of Claims 1 to 10 for making a powder, granules, a monolayer structure or at least one layer of a multilayer structure.

13. Use according to Claim 12, **characterized in that** the powder, the granules, the monolayer structure or the multilayer structure are in the form of fibers, a film, a pipe, filaments, a molded object, a three-dimensional object obtained via a technique of powder aggregation by radiation-induced melting or sintering, a hollow body or an injection-molded piece.

14. Use of the composition according to any one of Claims 1 to 10, for the production of all or part of equipment components for the following sectors: electrical, electronic, motor vehicle, transportation or transfer of gas, petroleum and compounds thereof, in particular intended for use in the offshore industry.

15. Use according to Claim 14, **characterized in that** when these motor vehicle equipment components are in the form of tubes and/or connectors, they are used in air intake devices, cooling devices or devices for transporting or transferring fuels or fluids such as water or oil.
